# EUROPEAN PATENT SPECIFICATION

(11) **EP 0 861 813 B1**
(45) Date of publication and mention of the grant of the patent: **05.06.2002**
(21) Application number: 98103221.2
(22) Date of filing: 24.02.1998
(51) Int. Cl.: C03B 33/07, B32B 31/00, B26D 7/00

(54) **A cutting assembly for trimming at least one flexible layer used to cover at least one sheet**
Schneidevorrichtung zum Schneiden der Ränder von zumindestes einer flexibeler Schicht zum abdecken von zumindestes einer Scheibe
Appareil de coupe pour couper les rebords d'au moins une couche flexible utilisée pour recouvrir au moins une feuille

(30) Priority: 28.02.1997 IT TO970173
(43) Date of publication of application: 02.09.1998
(73) Proprietor: BOTTERO S.p.A., 12010 Cuneo (IT)
(72) Inventor: Bergia, Alessandro, 12023 Caraglio (IT); Codispoti, Ivano, 12020 Villafalletto (IT)
(74) Representative: Cerbaro, Elena, Dr.

(56) References cited:
- EP-A- 0 270 452
- GB-A- 2 144 363

## Description

The present invention relates to a cutting assembly for trimming at least one flexible layer used to cover at least one sheet.

In particular, the present invention finds application advantageously, though not exclusively, in the glass industry for trimming the flexible intermediate layers in multi-layer sheets of glass and the following description will refer specifically to this example, without implying thereby any restriction to the generality of application.

It is well known that a multi-layer sheet of glass is made by arranging one or more layers of flexible synthetic covering material between two consecutive sheets of glass, the former being initially cut to size whereby they project beyond the perimeter edges of the sheets of glass, and are subsequently trimmed, by removing the portion of flexible material extending beyond the glass, before subjecting the layered glass to a heat and compression process.

In the prior art, cutting blades or knives are used, these being advanced manually with reference to the lateral surfaces of the sheets of glass.

This operating method significantly limits the production rate so it is generally only used for small quantities, especially since it requires specialised personnel.

In order to overcome these problems, cutting heads are currently in use which include a motor-driven rotating disc. Although, on one hand these cutting heads do resolve problems connected with manual trimming, on the other, they do not permit a high degree of accuracy, especially when the cut must be made along a cutting line at a distance from the edge of the glass, in order to allow for shrinkage of the covering layers during the subsequent operation of heating and compressing the glass. Under these conditions, as a result of the force exerted by the disc itself, the portion of the layer between the edge of the glass and the cutting disc tends to fold over onto the lower sheet of glass, first stretching and then shrinking unpredictably after the cutting disc has passed. As a result of this stretching, the edge of the flexible layer ends up wavy in some cases and ragged in others, and the finished layer may have edge portions of varying thickness and usually detached from the glass.

In order, at least partly, to prevent the layers from folding over on the glass, the cutting disc is rotated at high speed of rotation. However, rapid rotation of the disc causes localised overheating of the covering layers, which tend to stick to the disc, soiling it and progressively altering both the cutting edges of the disc and the roughness of the faces of the disc which rub against the covering layers. This overheating of the layers increases proportionately as the disc wears, and a worn disc not only spoils the appearance of the edges of the covering layers but also leads to a progressive build-up of dust which disperses into the air around the cutting assembly.

The object of the present invention is to provide a cutting assembly which overcomes the problems described above both simply and economically.

According to the present invention, a cutting assembly is provided for trimming at least one flexible layer used to cover at least one sheet and having an edge portion to be trimmed which projects beyond the edges of the sheet itself, this assembly comprising a motor-driven cutting disc having a cutting edge and being rotatable about an axis, characterised in that it also includes abutment means for the said edge portion, arranged tangentially of a peripheral surface of the said cutting disc so as to exert, in use, a force opposite that exerted by the disc on the flexible layer at exactly the cutting point.

In the unit defined above, the said abutment means are preferably arranged tangentially to the cutting edge of the said cutting disc.

The invention will now be described with reference to the appended drawings, which illustrate several embodiments by way of non-limitative example, in which:
Figure 1 is a schematic plan view of a first, preferred, embodiment of a cutting unit with a preferred cutting assembly according to the present invention for trimming flexible layers;
Figure 2 is a greatly enlarged side view of the cutting assembly of Figure 1;
Figure 3 is an enlarged view from above of a detail of Figure 2; and
Figures 4 to 6 are schematic plan views of three different embodiments of cutting units having two or more cutting assemblies according to the present invention.

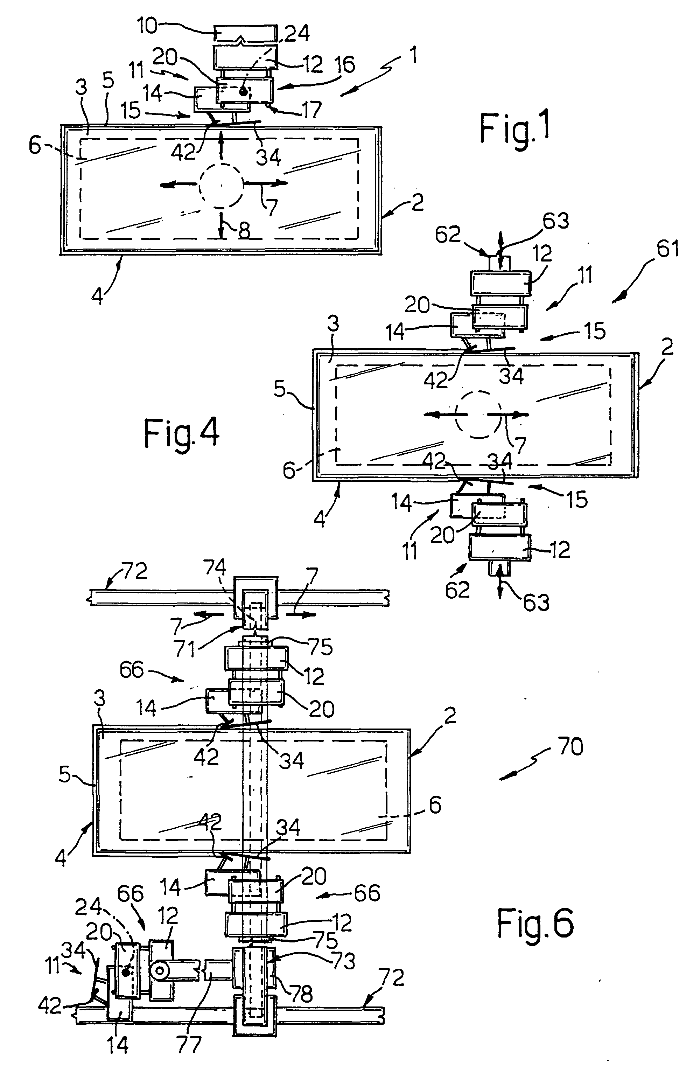

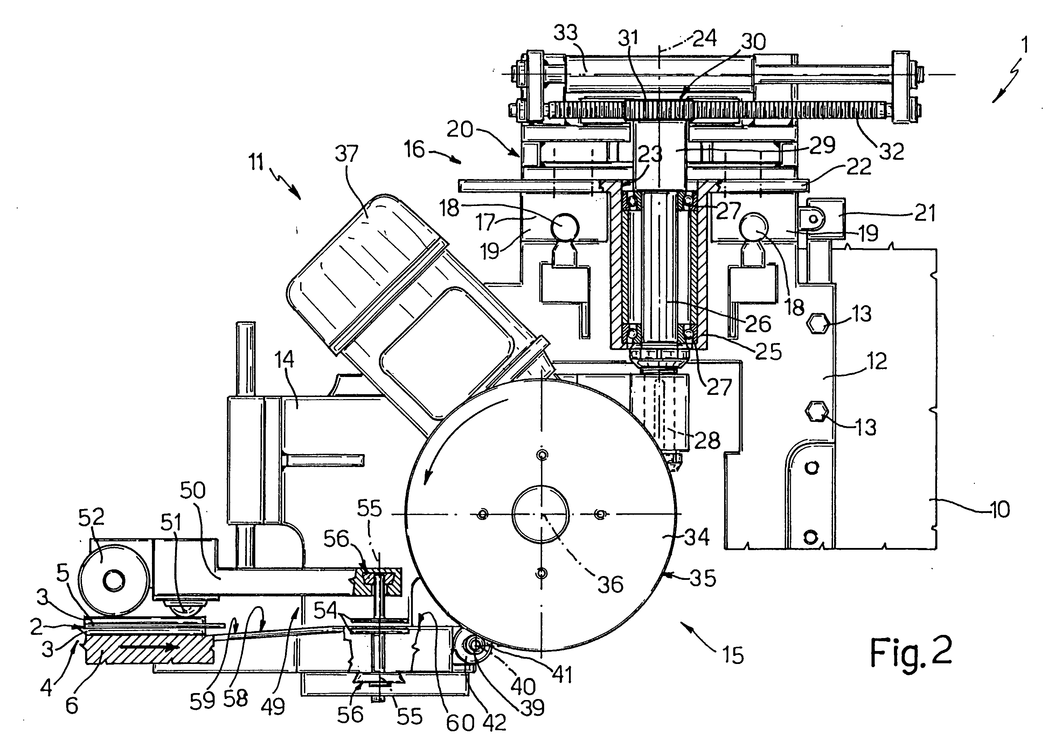

In Figure 1, a cutting unit is generally indicated 1 for trimming a flexible layer 2, normally a layer of synthetic thermoplastic material which, in the particular example described, is arranged between two flat sheets 3 of glass placed one on the other to form a multi-layer sheet 4 of glass (Figures 1 and 2) and has a perimetral portion 5 projecting beyond the edges of the sheets 3.
In the unit 1, the sheet 4 is arranged on a support table 6 known per se which is fixed in known manner to a base (not illustrated) so as to be translatable in a horizontal plane along two directions 7 and 8 perpendicular to each other.

Still with reference to Figure 1, but in particular to Figure 2, the unit 1 includes a known motor-driven carriage 10 spaced from the table 6 and coupled to a guide (not illustrated) operable to move, in use, parallel to the edges of the sheet 4 resting on the table 6, and a cutting assembly 11 supported by the carriage 10 for trimming the portion 5 of the layer 2.

As illustrated in Figure 2, the cutting assembly 11 includes a first frame 12 securely fixed to the carriage 10 by a plurality of screws 13, only two of which are illustrated in Figure 2, and a second frame 14, which constitutes part of a cutting head 15 and is connected to the first frame 12 by means of a connector device 16 operable to enable relative movement between the frames 12 and 14.

With reference still to Figure 2, the device 16 includes a fixed guide, which is securely fixed to the frame 12, and which projects beyond the frame 12 parallel to the direction 8 and raised from the table 6, and includes, in turn, two transversely spaced rectilinear rods 18.
The rods 18 have connected to them, for axial sliding, the respective shoes 19 of a slide 20 movable along the guide 17 and driven by a linear actuator 21, preferably a pneumatic actuator of the type fitted with mechanical stops, not shown as they are known per se.

The slide 20 includes a plate 22 which connects the shoes 19 to each other, carries a bracket for the actuating rod of the actuator 21 securely fixed to it and has a through-hole 23 coaxial with a vertical axis 24 perpendicular to the guide 17 and to the table 6 and extending between the rods 18.

The portion of the plate 22 delimiting the hole 23 is integral with an end of a cylindrical tubular body 25 which extends between the rods 18 in the direction of the frame 14 in a position coaxial with the axis 24. A shaft 26 passes through the body 25 and the hole 23 having an intermediate portion connected to the body 25 for rotation about the axis 24 and fixed axially by a pair of bearings 27, and two end portions 28 and 29, the portion 28 being securely fixed to the frame 14 in a known manner.

The shaft 26 constitutes part of the device 16 and is rotatable about its axis 24 driven by a rack and pinion transmission 30 in which the pinion 31 is keyed on the portion 29 and meshes with a rack 32. The rack 32 is connected to the slide 20 for sliding in a direction perpendicular to the axis 24 and is movable in opposite directions to the slide 20 under the action of a pneumatic actuator 33 operable to rotate the shaft 26 and, thereby, the cutting head 15 about the axis 24 between two extreme end-of-travel angular positions at 180° to each other.

With reference once again to Figure 2, the cutting head 15 comprises a cutting disc 34 with a cutting edge 35 and is fixed to the associated frame 14, in a known manner, for rotation about an axis 36, substantially parallel to the guide 17, driven by an electric motor 37, the outer casing of which is securely fixed to the frame 14.

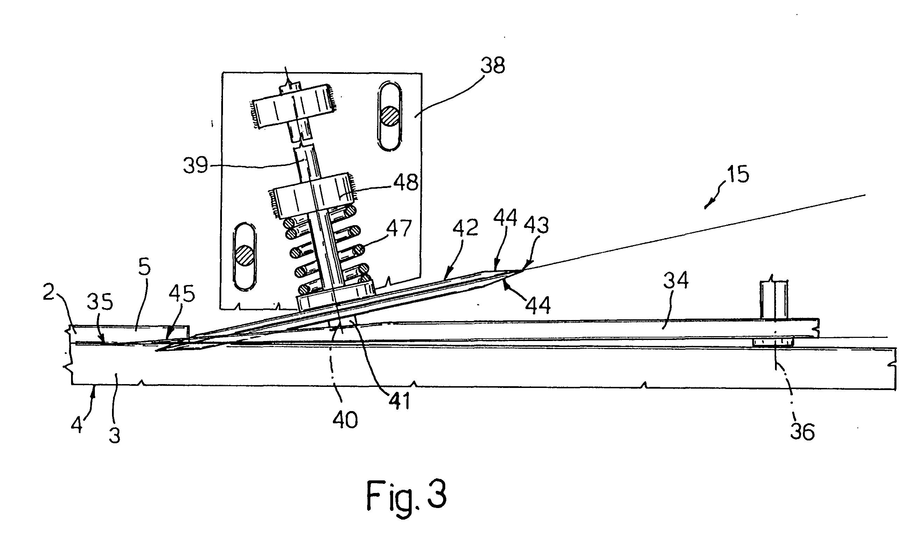

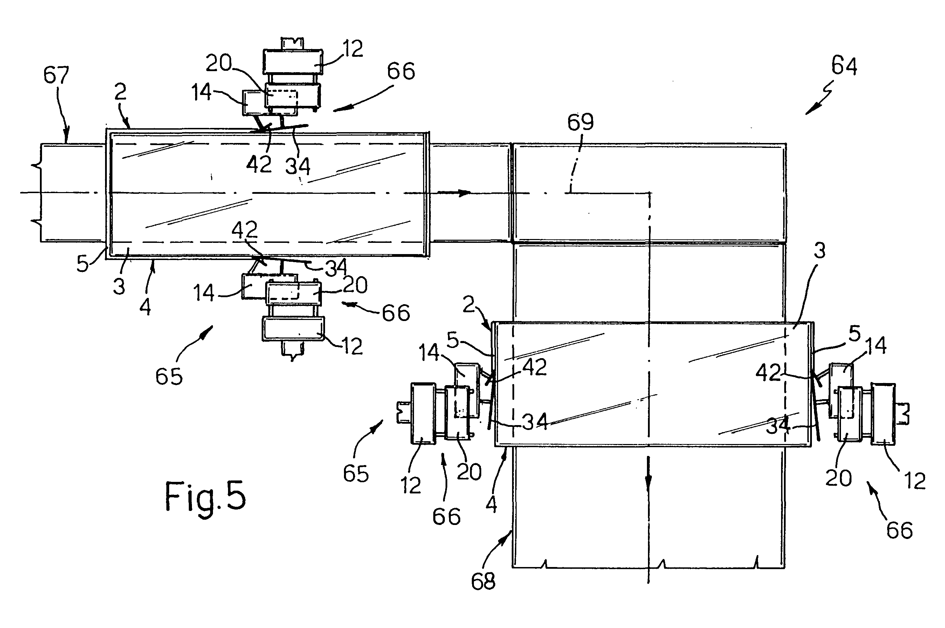

Still with reference to Figure 2, but more particularly to Figures 3 and 4, the cutting head 15 also includes a support plate 38 arranged near the cutting edge 35 and, in use, to one side of the cutting disc and supports, in turn, a shaft 39. The shaft 39 has an axis 40 which is skew relative to the axis 36, coupled to the plate 38 for rotation about the axis 40 and for axial sliding and includes an end portion 41 which projects beyond the plate 38 in a position facing but spaced from the cutting edge 35 and beneath the disc 34 itself.

An abutment disc 42 which constitutes part of the head 15 is keyed to the portion 41, arranged on the same side of the plate 38 as the disc 34, in a position inclined to the said disc 34. The disc 42 has an annular peripheral portion, externally delimited by a perimetral edge 43 which is not necessarily a cutting edge, and by two surfaces 44 which in this specific case converge towards each other and towards the edge 43, and part of it extends in a position facing and tangential to a surface 45 of the disc 34 opposite that which, in use, faces the sheet 3. In particular, the disc 42 is inclined to the disc 34 by an angle which ensures that its edge 43 and one of its surfaces 44 are tangential to the cutting edge 35 and the surface 45 respectively.

The disc 42 is pressed against the disc 34 by the action of a thrust spring 47 (Figure 3) coiled around the shaft 39 and compressed between the disc 42 and a fixed abutment 48 securely fixed to the plate 38 so that, in use, the disc 42 is rotated by the disc 34.

The position of the cutting head 15 in relation to the table 6, and therefore of the discs 34, 42 in relation to the sheets 3 can be adjusted by means of a positioning and adjustment device 49. The device 49 constitutes part of the head 15, includes a bracket 50 which extends above the table 6, downstream of the discs 34 and 42 in the sense of advance of the table 6 during the trimming of the portion 5 of the layer 2 and is connected to the frame 14 so as to be adjustable along a direction perpendicular to the said table. Connected to a first end portion of the bracket 50, opposite that adjacent the disc 34, is a spherical reference body 51 facing the table 6 and operable to roll, in use, in contact with the upper sheet 3 of glass, and a lead-in roller 52. The device 49 also includes a pair of bearing rollers 54 (Figure 2), one coupled to the frame 14 and the other to the portion of the bracket 50 adjacent the disc 34 for rotation about respective axes 55 parallel to the axis 24 and, in use, in contact with a lateral surface of a sheet 3 of glass. The rollers 54 are coupled to the frame 14 and to the bracket 50 by means of respective, known, guide and slide assemblies operable to enable the rollers 54 to move relative to the table 6 in respective directions parallel to the axis 36 of the disc 34 and, thereby, to enable the distance of the said disc 34 from the sheets of glass 3 to be adjusted.

With reference again to Figure 2, the head 15 finally includes a sliding surface 58, against which the portion 5 of the layer 2 slides in use. The surface 58 comprises, in turn, an inclined lead-in portion 59 and a flat portion 60 which is parallel to and higher than the bearing surface of the table 6 by an amount equal to the thickness of the lower sheet 3 of glass so as to advance the portion 5 of the covering layer 2 precisely between the discs 34 and 42 and, in particular, into contact with the edge 35 of the disc 42 itself.

The embodiment illustrated in Figure 4 relates to a cutting unit 61 similar to the unit 1 and the parts thereof are distinguished, where possible, by the same reference numbers as the corresponding parts of unit 1.

In unit 61, the table 6 for supporting the sheet 4 is fixed to the base (not illustrated) so as to be able to translate only in the direction 7, and has two cutting assemblies 11 arranged on opposite sides of the table 6 and a third cutting assembly 11 (not shown) with a carriage 10 movable in a direction perpendicular to the direction 7.

In unit 61, the frames 12 of the assemblies 11 facing each other are securely fixed to the respective slides of respective, known, motor-driven guide and slide assemblies 62 operable to enable each cutting assembly to move away from and towards the table 6 in a direction 63 perpendicular to the direction 7, while the frames 14 are securely fixed to the associated slides 20 with no possibility of rotating relative to the frames 12.

The embodiment illustrated in Figure 5 relates to a unit 64 which differs from the unit 61 in a few constructional details but whose constituent parts are indicated, where possible, by the same reference numerals as the corresponding parts of unit 61.

The unit 61 includes two cutting stations 65 with each of these housing a pair of cutting assemblies 66. The assemblies 66 of each pair are arranged on opposite sides of known conveyor belts 67, 68, arranged one after the other to advance the sheet through the stations 65 along an L-shaped path 69.

Each of the assemblies 66 is similar to the assembly 11, having its own frame 12 coupled to a guide and slide assembly substantially the same as the assembly 62 and differing from the said assembly 11 by the fact that the frame 14 is securely fixed to the slide 20 with no possibility of rotation relative to the frame 12 itself.

The embodiment illustrated in Figure 6 relates to a cutting unit 70 differing from the unit 61 in a few constructional details and the constituent parts of which are indicated, where possible, by the same reference numerals as the corresponding parts of the unit 61.

In the unit 70, the table 6 is securely connected to the base (not illustrated) and has a motor-driven portal frame 71 which is slidable on an associated guide 72 along the direction 7 and includes a crosspiece 73 extending above the table 6 parallel thereto. The cross piece 73 carries a securely fixed first guide perpendicular to the direction 7, to which are coupled two slides 75. The frame 12 of an associated cutting assembly of the same construction as the assembly 66 is securely connected to each slide 75.

The unit 70 also differs from the unit 61 in that it includes a further assembly of the same construction as the assembly 11, the frame 12 of which is securely fixed by an arm 77 to a motor-driven slide 78 which is slidable along a second guide, not shown in Figure 6, parallel to the guide 74.

In use, once the sheet 4 is positioned near a cutting assembly 11, 66, the portion 5 of the layer to be trimmed, possibly folded or rolled downwards, slides into contact with the surface 58, moving progressively into a position coplanar with the portion of the layer 2 trapped between the sheets 3 of glass; the actuator 21 then moves the respective heads 11, 66 towards the sheet 4, forcing each roller 54 against a respective sheet 3 of glass and thus positioning the disc 34 at a specific distance from the edges of the sheets 3. At this point, upon relative longitudinal movement between the sheet 4 and the assembly 11, 66, the discs 34 and 42 progressively trim the portion 5 along a predetermined cutting line. While cutting, the disc 42 exerts an action on the portion 5 of the layer 2 which, as a result of the particular arrangement of the disc 42 in relation to the cutting disc 34, is not only in opposition to that exerted by the said disc 34 but is applied at exactly the point at which the action is exerted by the cutting disc 34. As a result, during the passage of the layer 2 between the discs 34 and 42, the portion 5 is not affected by any flexion causing creases or distortions in the layer 2, so that, even during passage between the discs 34 and 42, the portion 5 remains in the coplanar condition it was in as it arrived between the said discs 34 and 42. The fact that the precise region of the layer 2 being cut remains constantly coplanar with the remaining portion of the said layer 2 enables the layer 2 to be trimmed along the precise cutting line desired, avoiding the formation of torn or wavy edges and without any stretching, creasing and/or detaching of the layer 2 from the sheets 3 of glass.

The trimming of the layer 2 is further facilitated by the particular relative positioning of the discs 34 and 42 and, in particular, by the fact that both discs 34 and 42 rotate at the same angular velocity about respective axes 36, 40 skewed with respect to each other. In effect, during the cutting action, the relative inclination of the discs 34, 42 causes the portion 5 progressively to distance itself transversely from the sheets 3 and the disc 34, thus assisting the cutting and detachment of the said portion 5, while the rotation of both discs 34 and 42 at the same angular velocity draws the layer 2 along, avoiding the formation or creases and crinkles. The combination of the two said actions considerably facilitates the trimming operation which, at this point, can be carried out by rotating the disc 34 at relatively low speeds.

The accuracy and quality of the cut are also increased by the fact that the cutting disc 34 always operates under optimum cutting conditions. In effect, since the disc 42 is constantly tangential to the cutting disc 34 and forced against it by the thrust action of the spring 47, the said disc 42 continuously sharpens the cutting disc 34 during trimming, and also cleans the peripheral portion of the said disc 34, eliminating any trace of layer material present on it and thereby avoiding any abrasive action on the part of the disc 34 with the consequent inevitable formation of dust. It is clear from the above that the constructionial details of the assemblies 11, 66 enable the same cutting accuracy to be achieved whatever the thickness, and thus the rigidity of the cladding layer 2 and make it possible to trim several layers on top of one another simultaneously.
It also appears clear from the above that modifications and variations may be made to the cutting assemblies 11, 66 without thereby departing from the protective scope of the present invention.

In particular, the disc 42 could be keyed to a fixed shaft and simply cooperate slidingly with the disc 34. The said disc 42 could also be replaced by a different abutment member, for example an abutment member fixed relative to the frame 14, held tangential to a peripheral portion of the disc 34 extending from the edge 35 of the said disc 34.

In addition, different systems could be provided both for moving and for adjusting the cutting head 15 relative to the sheet 4. In particular, it is clear that the cutting head 15 could be carried by a table with adjustable axes, adjustable, for example, by a conventional numerical control, and moved in such a way as to cut the layer 2 along any cutting line, for example a broken line or a curved line.

## Claims

1. A cutting assembly (11;66) for trimming at least one flexible layer (2) used to cover at least one sheet (3) and having a perimeter portion (5) to be trimmed which projects beyond the edges of the said sheet (3), the assembly (11; 66) including a motor-driven cutting disc (34) having a cutting edge (35) and rotatable about an axis (36), **characterised in that** it also includes abutment means (42) for the said perimeter portion (5) disposed tangential to a peripheral surface (45) of the said cutting disc (34) so as to exert, in use, at the exact point being cut, an opposing force to that exerted by the said disc (34) on the flexible layer (2).

2. An assembly according to Claim 1, **characterised in that** the said abutment means (42) are tangential to the cutting edge (35) of the said cutting disc (34).

3. An assembly according to either Claim 1 or Claim 2, **characterised in that** it includes thrust means (47) for urging the said abutment means (42) against the said peripheral surface (45) of the cutting disc (34).

4. An assembly according to Claim 3, **characterised in that** it includes guide means (39, 48) for guiding the abutment means (42) away from and towards the said cutting disc (34) along a first rectilinear direction (40); the said thrust means (47) including resilient means (47) associated with the said guide means (39).

5. An assembly according to Claim 4, **characterised in that** the said resilient means comprise a single coil spring (47).

6. An assembly according to Claim 4 or Claim 5, **characterised in that** the said first direction (40) and the axis (36) of rotation of the said cutting disc (34) are skew with respect to one another.

7. An assembly according to any one of the preceding claims, **characterised in that** the said abutment means (42) are rotatable relative to the cutting disc (34) about a pivot axis (40) distinct from the axis (36) of rotation of the said cutting disc (34).

8. An assembly according to Claim 7, **characterised in that** the pivot axis (40) and the axis (36) of rotation of the cutting disc (34) are skew with respect to one another.

9. An assembly according to Claim 7 or Claim 8, **characterised in that** the said abutment means include an abutment disc (42) coaxial with the said pivot axis (40) and tangential to the said cutting disc (34).

10. An assembly according to Claim 9, **characterised in that** an outer peripheral edge (43) of the said abutment disc (42) is tangential to the cutting edge (35) of the said cutting disc (34).

11. An assembly according to Claim 9 or Claim 10, **characterised in that** it includes a support shaft (39) coaxial with the said pivot axis (40); the said abutment disc (42) being carried by the said shaft (39) and being drawn in rotation by the said cutting disc (34).

12. An assembly according to any of Claims 9 to 11, **characterised in that** the said abutment disc (42) has an outer diameter smaller than that of the said cutting disc (34).

13. An assembly according to any one of Claims 9 to 12, **characterised in that** it also includes a first frame (12) for connection to a support member (10; 75), a second support frame (14) for the said discs (34) (42) and connection means (16) between the said frames (12, 14) so as to enable the frames (12) (14) to be adjusted relative to one another.

14. An assembly according to Claim 13, **characterised in that** the said connection means (16) include a guide and slide assembly (17, 20) including a guide (17) extending in a direction substantially parallel to the axis (36) of rotation of the said cutting disc (34), and a slide (20) coupled to the guide (17) so as to be slidable axially.

15. An assembly according to Claim 14, **characterised in that** the said connection means (16) also include angular-motion means (26, 30) for rotating the said second frame (14) relative to the first frame (12) about a common pivot axis (24).

16. An assembly according to Claim 15, **characterised in that** the said angular motion means (26, 30) include a support shaft (26) coaxial with the said pivot axis (24) and coupled to the said slide (20) for rotation about the said pivot axis (24) but in an axially fixed position; the said second frame (14) being securely fixed to the said support shaft (26).

17. An assembly according to Claim 15 or 16, **characterised in that** the said shaft is rotatable about the pivot axis (24) under the action of a rotary actuator (30, 33) for rotating the said second frame (14) between two end-of travel angular operating positions at 180° to each other.

18. An assembly according to any one of Claims 13 to 17, **characterised in that** it includes adjustable relative positioning means (54, 56), associated with the said second frame (14) and cooperating, in use, in contact with the said sheet (3) so as to position the said cutting disc (34) at a determined distance from the said sheet (3).

19. A cutting unit (1; 61; 64; 66) for trimming at least one flexible layer (2) used to cover at least one sheet (3) including support means for the said sheet (6; 67; 68) and cutting means (11) for trimming the said covering layer, **characterised in that** the cutting means include at least one cutting assembly (11) constructed according to any one of the preceding claims.

## Patentansprüche

1. Schneidvorrichtung (11; 66) zum Schneiden zumindest einer flexiblen Schicht (2), die zum Beschichten zumindest einer Platte (3) verwendet wird und die einen zu schneidenden Umfangsabschnitt (5) aufweist, welcher über die Ränder der Platte (3) hinausragt, wobei die Vorrichtung (11; 66) eine motorgetriebene Schneidscheibe (34) aufweist, die einen Schneidrand (35) aufweist und um eine Achse (36) drehbar ist, **dadurch gekennzeichnet, dass** sie auch Anschlagmittel (42) für den Umfangsabschnitt (5) aufweist, die tangential an einer Umfangsfläche (45) der Schneidscheibe (34) derart angeordnet sind, dass sie bei Verwendung an der zu schneidenden genauen Stelle eine Gegenkraft zu der von der Scheibe (34) an der flexiblen Schicht (2) ausgeübten Kraft ausüben.

2. Vorrichtung nach Anspruch 1, **dadurch gekennzeichnet, dass** die Anschlagmittel (42) tangential zu dem Schneidrand (35) der Schneidscheibe (34) verlaufen.

3. Vorrichtung nach Anspruch 1 oder 2, **dadurch gekennzeichnet, dass** sie Druckmittel (47) zum Vorspannen der Anschlagmittel (42) gegen die Umfangsfläche (45) der Schneidscheibe (34) aufweist.

4. Vorrichtung nach Anspruch 3, **dadurch gekennzeichnet, dass** sie Führungsmittel (39, 48) zum Führen der Anschlagmittel (42) von der Schneidscheibe (34) weg und auf diese zu entlang einer ersten geradlinigen Richtung (40) aufweist; wobei die Druckmittel (47) Federmittel (47) aufweisen, die den Führungsmitteln (39) zugeordnet sind.

5. Vorrichtung nach Anspruch 4, **dadurch gekennzeichnet, dass** die Federmittel eine einzige Schraubenfeder (47) aufweisen.

6. Vorrichtung nach Anspruch 4 oder 5, **dadurch gekennzeichnet, dass** die erste Richtung (40) und die Drehachse (36) der Schneidscheibe (34) schräg zueinander verlaufen.

7. Vorrichtung nach einem der vorhergehenden Ansprüche, **dadurch gekennzeichnet, dass** die Anschlagmittel (42) relativ zu der Schneidscheibe (34) um eine von der Drehachse (36) der Schneidscheibe (34) verschiedene Drehachse (40) drehbar sind.

8. Vorrichtung nach Anspruch 7, **dadurch gekennzeichnet, dass** die Drehachse (40) und die Drehachse (36) der Schneidscheibe (34) schräg zueinander verlaufen.

9. Vorrichtung nach Anspruch 7 oder 8, **dadurch gekennzeichnet, dass** die Anschlagmittel eine Anschlagscheibe (42) koaxial zu der Drehachse (40) und tangential zu der Schneidscheibe (34) aufweisen.

10. Vorrichtung nach Anspruch 9, **dadurch gekennzeichnet, dass** ein äußerer Umfangsrand (43) der Anschlagscheibe (42) tangential zu dem Schneidrand (35) der Schneidscheibe (34) verläuft.

11. Vorrichtung nach Anspruch 9 oder 10, **dadurch gekennzeichnet, dass** sie eine Stützwelle (39) koaxial zu der Drehachse (40) aufweist; wobei die Anschlagscheibe (42) von der Welle (39) getragen wird und von der Schneidscheibe (34) in Drehung versetzt wird.

12. Vorrichtung nach einem der Ansprüche 9 bis 11, **dadurch gekennzeichnet, dass** die Anschlagscheibe (42) einen Außendurchmesser aufweist, der kleiner als der der Schneidscheibe (34) ist.

13. Vorrichtung nach einem der Ansprüche 9 bis 12, **dadurch gekennzeichnet, dass** sie auch einen ersten Rahmen (12) zum Verbinden mit einem Stützteil (10; 75), einen zweiten Stützrahmen (14) für die Scheiben (34, 42) und Verbindungsmittel (16) zwischen den Rahmen (12, 14) aufweist, um ein Verstellen der Rahmen (12, 14) relativ zueinander zu ermöglichen.

14. Vorrichtung nach Anspruch 13, **dadurch gekennzeichnet, dass** die Verbindungsmittel (16) eine Führungs- und eine Gleiteinrichtung (17, 20) aufweisen, die eine Führung (17), die sich in Richtung im wesentlichen parallel zu der Drehachse (36) der Schneidscheibe (34) erstreckt, und einen Schlitten (20) aufweisen, der mit der Führung (17) axial gleitend gekuppelt ist.

15. Vorrichtung nach Anspruch 14, **dadurch gekennzeichnet, dass** die Verbindungsmittel (16) auch Winkelbewegungsmittel (26, 30) zum Drehen des zweiten Rahmens (14) relativ zu dem ersten Rahmen (12) um eine gemeinsame Drehachse (24) aufweisen.

16. Vorrichtung nach Anspruch 15, **dadurch gekennzeichnet, dass** die Winkelbewegungsmittel (26, 30) eine Stützwelle (26) koaxial zu der Drehachse (24) aufweisen und mit dem Schlitten (20) zum Drehen um die Drehachse (24), jedoch in einer axial festgelegten Stellung, gekuppelt sind; wobei der zweite Rahmen (14) an der Stützwelle (26) sicher festgelegt ist.

17. Vorrichtung nach Anspruch 15 oder 16, **dadurch gekennzeichnet, dass** die Welle um die Drehachse (24) unter der Einwirkung einer drehbaren Betätigungsvorrichtung (30, 33) zum Drehen des zweiten Rahmens (14) zwischen zwei Betriebsstellungen im Endbewegungswinkel von 180° zueinander drehbar ist.

18. Vorrichtung nach einem der Ansprüche 13 bis 17, **dadurch gekennzeichnet, dass** sie einstellbare Relativstellungsmittel (54, 56) aufweist, die dem zweiten Rahmen (14) zugeordnet sind und bei Verwendung in Kontakt mit der Platte (3) zusammenwirken, um die Schneidscheibe (34) in einem vorbestimmten Abstand von der Platte (3) zu positionieren.

19. Schneideinrichtung (1; 61; 64; 66) zum Schneiden zumindest einer flexiblen Schicht (2), die zum Beschichten zumindest einer Platte (3) verwendet wird, mit Stützmitteln für die Platte (6; 67; 68) und Schneidmitteln (11) zum Schneiden der Beschichtung, **dadurch gekennzeichnet, dass** die Schneidmittel zumindest eine Schneidvorrichtung (11) aufweisen, die nach einem der vorhergehenden Ansprüche aufgebaut ist.

## Revendications

1. Ensemble de coupe (11 ; 66) pour la taille d'au moins une couche flexible (2) utilisée pour couvrir au moins une feuille (3) et ayant une partie périphérique (5) à tailler qui fait saillie au delà des bords de ladite feuille (3), cet ensemble (11 ; 16) comportant un disque coupant entraîné par moteur (34) ayant une arête coupante (35) et pouvant tourner autour d'un axe (36), **caractérisé par le fait qu'**il comporte aussi un moyen de butée (42) pour ladite partie périphérique (5) placé tangent à une surface périphérique (45) dudit disque coupant (34) afin d'exercer pendant l'utilisation, au point exact coupé, une force opposée à celle exercée par ledit disque (34) sur la couche flexible (2).

2. Ensemble selon la revendication 1, **caractérisé par le fait que** ledit moyen de butée (42) est tangent à l'arête coupante (35) dudit disque coupant (34).

3. Ensemble selon l'une des revendications 1 et 2, **caractérisé par le fait qu'**il comporte un moyen de poussée (47) pour pousser ledit moyen de butée (42) contre ladite surface périphérique (45) du disque coupant (34).

4. Ensemble selon la revendication 3, **caractérisé par le fait qu'**il comporte un moyen de guidage (39, 48) pour guider le moyen de butée (42) s'éloignant et s'approchant dudit disque coupant (34) le long d'une première direction rectiligne (40), ledit moyen de poussée (47) comportant un moyen élastique (47) associé audit moyen de guidage (39).

5. Ensemble selon la revendication 4, **caractérisé par le fait que** ledit moyen élastique comprend un seul ressort hélicoïdal (47).

6. Ensemble selon l'une des revendications 4 et 5, **caractérisé par le fait que** ladite première direction (40) et l'axe (36) de rotation dudit disque coupant (34) sont inclinés l'un par rapport à l'autre.

7. Ensemble selon l'une des revendications précédentes, **caractérisé par le fait que** ledit moyen de butée (42) peut tourner par rapport au disque de coupe (34) autour d'un axe de pivotement (40) distinct de l'axe (36) de rotation dudit disque coupant (34).

8. Ensemble selon la revendication 7, **caractérisé par le fait que** l'axe de pivotement (40) et l'axe (36) de rotation du disque coupant (34) sont inclinés l'un par rapport à l'autre.

9. Ensemble selon l'une des revendications 7 et 8, **caractérisé par le fait que** ledit moyen de butée comporte un disque de butée (42) dont l'axe coïncide avec ledit axe de pivotement (40) et qui est tangent audit disque coupant (34).

10. Ensemble selon la revendication 9, **caractérisé par le fait qu'**un bord périphérique extérieur (43) dudit disque de butée (42) est tangent à l'arête coupante (35) dudit disque coupant (34).

11. Ensemble selon l'une des revendications 9 et 10, **caractérisé par le fait qu'**il comporte un arbre support (39) ayant comme axe ledit axe de pivotement (40), ledit disque de butée (42) étant porté par ledit arbre (39) et entraîné en rotation par ledit disque coupant (34).

12. Ensemble selon l'une des revendications 9 à 11, **caractérisé par le fait que** ledit disque de butée (42) a un diamètre extérieur plus petit que celui dudit disque coupant (34).

13. Ensemble selon l'une des revendications 9 à 12, **caractérisé par le fait qu'**il comporte aussi un premier châssis (12) pour liaison à un élément support (10 ; 75), un deuxième châssis support (14) pour lesdits disques (34, 42) et un moyen de liaison (16) entre lesdits châssis (12, 14) afin de permettre le réglage des châssis (12, 14) l'un par rapport à l'autre.

14. Ensemble selon la revendication 13, **caractérisé par le fait que** ledit moyen de liaison (16) comporte un ensemble de guidage et de coulissement (17, 20) comportant un guide (17) s'étendant dans une direction sensiblement parallèle à l'axe (36) de rotation dudit disque coupant (34), et un coulisseau (20) accouplé au guide (17) de façon à pouvoir coulisser axialement.

15. Ensemble selon la revendication 14, **caractérisé par le fait que** ledit moyen de liaison (16) comporte aussi un moyen de mouvement angulaire (26, 30) pour la rotation dudit deuxième châssis (14) par rapport au premier châssis (12) autour d'un axe commun de pivotement (24).

16. Ensemble selon la revendication 15, **caractérisé par le fait que** ledit moyen de mouvement angulaire (26, 30) comporte un arbre support (26) ayant comme axe ledit axe de pivotement (24) et accouplé audit coulisseau (20) pour tourner autour dudit axe de pivotement (24), mais dans une position fixe axialement, ledit deuxième châssis (14) étant solidement fixé audit arbre support (26).

17. Ensemble selon l'une des revendications 15 et 16, **caractérisé par le fait que** ledit arbre peut tourner autour de l'axe de pivotement (24) sous l'action d'un actionneur rotatif (30, 33) pour faire tourner ledit deuxième châssis (14) entre deux positions fonctionnelles angulaires de fin de course à 180° l'une de l'autre.

18. Ensemble selon l'une des revendications 13 à 17, **caractérisé par le fait qu'**il comporte un moyen réglable de positionnement relatif (54, 56), associé audit deuxième châssis (14) et coopérant, lors de l'utilisation, en contact avec ladite feuille (3) de façon à positionner ledit disque coupant (34) à une distance déterminée de ladite feuille (3).

19. Dispositif de coupe (1 ; 61 ; 64 ; 66) pour la taille d'au moins une couche flexible (2) utilisée pour couvrir au moins une feuille (3), comportant un moyen de support pour ladite feuille (6 ; 67 ; 68) et un moyen de coupe (11) pour la taille de ladite couche de couverture, **caractérisé par le fait que** le moyen de coupe comporte au moins un ensemble de coupe (11) construit selon l'une des revendications précédentes.
